# EUROPEAN PATENT APPLICATION

(11) **EP 2 566 207 A1**
(43) Date of publication of application: **06.03.2013**
(21) Application number: 11179977.1
(22) Date of filing: 05.09.2011
(51) Int. Cl.: H04W 12/08, H04L 29/06, G06F 12/14, H04L 29/08

(54) **Computer network, mobile telephone device, and computer program for writing encrypted files to a telecommunications access card**

(71) Applicant: Morpho Cards GmbH, 24220 Flintbek (DE)
(72) Inventor: Winter, Christian, 33378 Rheda-Wiedenbrück (DE)
(74) Representative: Richardt Patentanwälte GbR

(57) **Abstract**

A computer network (500, 600) comprising a central server (516) for providing a computer program (524) comprising machine executable instructions and a mobile telephone device (502) comprising a processor (544) for executing the computer program. The mobile telephone is configured for receiving the computer program from the central server via a network connection (510, 514). The mobile telephone device comprises a telecommunication access card (554). The telecommunications access card has an accessible memory (558) and a protected memory (562). Execution of the computer program causes the processor to write a set of encrypted files (526, 528, 530, 532) to the accessible memory in a predetermined order. The telecommunications access card is adapted to decrypt the encrypted files in the predetermined order into at least one decrypted file. The telecommunications access card is adapted to write the at least one decrypted file to the protected memory.

## Description

### Field of the invention

### Background and related art

Mobile telephone devices are ubiquitous in today's society. Many individuals carry at least one mobile telephone device, typically a cellular telephone. Many other mobile telephone devices such as netbook computers or tablet computers are also commonly carried and used. While user may communicate using a mobile telephone using a variety of different modality. For instance a user may send an SMS, download a web page, send or receive email, and/or make a voice telephone call.

The access to a mobile telephone network is controlled by a telecommunications access card. The telecommunications access card is provided by the operator of the mobile telephone network and is in installed in a mobile telephone device. Software and/or access codes on the telecommunications access card enable the mobile telephone device to connect to the mobile telephone network. The internal memory and software of the telecommunications access card is protected by passwords or encryption which is only known to the operator of the mobile telephone network.

The operator has several means of personalization, activating, and/or updating software on the telecommunications access card. The user or owner of the mobile telephone device may bring it to a shop or service center to be modified. This is known as a point of sale (POS) tool. This method has the disadvantage that the owner of the telephone needs to come to the shop or service center. Additionally, the passwords and/or codes necessary to access the telecommunications access card need to be transmitted to the shop. If a computer at the shop has been compromised by hackers then it is possible that these access codes or passwords will be stolen.

The telecommunications access card may also be updated by a so called Over The Air (OTA) campaign. In this method, digital SMS messages are sent to the telecommunications access card. The mobile telephone device then writes them to a special memory on the telecommunications access card which is accessible. The security of this method is provided by encryption of the messages. The telecommunications access card contains a digital key and decryption software which allows decryption of the messages. The authenticity of the messages is guaranteed by the encryption. However this method has a number of drawbacks. First the messages must be written to the accessible memory in a specific order, otherwise the decryption will fail. This means that if one SMS of a multi-part message is missed or delivered in the wrong order the update will fail. Updating the telecommunications access cards is also uneconomical. the digital SMS messages may use up valuable bandwidth of the mobile telephone network. This is particularly true if a large number of telecommunication access cards are being updated.

There is therefore a need for a better means of securely updating telecommunications access cards.

### Summary

The invention provides for a computer network, a mobile telephone device, and a computer readable storage medium in the independent claims. Embodiments are given in the dependent claims.

Embodiments of the invention may address the above mentioned problems or other problems by providing for machine executable instructions, a program, an application, or an app which is executed by the mobile telephone device. The instructions of the application cause the mobile telephone device to write a set of encrypted files to an accessible memory of the telecommunications access card. Essentially part of the OTA mechanism is used by the machine executable instructions to perform the update. This provides a secure method of verifying the authenticity of the set of encrypted files. The instructions may be provided with the mobile telephone device or they may be downloaded from a server. Since the encryption verifies the authenticity there is no need to provide the application securely. This eliminates the threat of hackers obtaining the valuable codes or passwords.

The application can be provided over a network connection that is established to the mobile telephone device. For instance may smart phones can connect to Bluetooth or WIFI networks. The use of such network connections as opposed to using the mobile telephone network is advantageous because it prevents the mobile telephone network from being clogged with digital SMS messages. Additionally, with the application, it is guaranteed that the set of encrypted files will be written to the accessible memory in the correct order. This ensures that the update will not fail.

A 'telecommunications access card' as used herein is a chip card which enables the login of a mobile telephone device into a digital cellular mobile telecommunications network. For example a telecommunications chip card may be a subscriber identity module (SIM) which securely stores a service-subscriber key which is used to identify the subscriber on the digital cellular mobile telecommunications network.

A 'computer-readable storage medium' as used herein is any storage medium which may store instructions which are executable by a processor of a computing device. The computer-readable storage medium may be a computer-readable non-transitory storage medium. The computer-readable storage medium may also be a tangible computer readable medium. In some embodiments, a computer-readable storage medium may also be able to store data which is able to be accessed by the processor of the computing device. An example of a computer-readable storage medium include, but are not limited to: a floppy disk, a magnetic hard disk drive, a solid state hard disk, flash memory, a USB thumb drive, Random Access Memory (RAM) memory, Read Only Memory (ROM) memory, an optical disk, a magneto-optical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example a data may be retrieved over a modem, over the internet, or over a local area network.

A 'memory' or 'memory means' as used herein is an example of a computer-readable storage medium. Memory is computer memory which is accessible to a processor. Examples of computer memory include, but are not limited to: RAM memory, register, and register files. When installed into a suitable reader other types of computer-readable storage medium may also be considered to be memory, examples include but are not limited to: a hard disk drive, a USB thumb drive, a floppy drive, a smart card, a DVD, a CD-ROM, and a solid state hard drive.

A 'processor' as used herein is an electronic component which is able to execute a program or machine executable instruction. References to the computing device comprising 'a processor' should be interpreted as possibly containing more than one processor. The term computing device should also be interpreted to possibly refer to a collection or network of computing devices each comprising a processor. Many programs have their instructions performed by multiple processors that may be within the same computing device or which may even distributed across multiple computing device.

A 'mobile telephone device' as used herein is a mobile communication device adapted for connecting to and providing access to a digital cellular mobile telecommunications network. Examples of a mobile telephone device include, but are not limited to: a mobile telephone, a personal digital assistant, a pager, a cellular modem for a computer, a netbook computer, a notebook computer, a tablet computer, and an electronic book or document reader.

A 'chip card reader interface' as used herein is an interface located on the telecommunications chip card which is adapted for connecting the telecommunications chip card to a chip card reader.

In one aspect the invention provides for a computer network including a central server for providing a computer program comprising machine executable instructions. The computer network further comprises a mobile telephone device comprising a processor for executing the computer program. A computer program as used herein encompasses a set of machine executable instructions. For instance for execution by a processor. The mobile telephone is configured for receiving the computer program from the central server via a network connection. The network connection as used herein encompasses any network connection excluding the mobile telephone network to which the mobile telephone device is able to connect to.

The mobile telephone device comprises a telecommunications access card. The telecommunications access card has an accessible memory and a protected memory. The accessible memory is a memory or register on the telecommunications card to which free read and write access is granted via the interface of the telecommunications access card. In principle when the telecommunications access card is inserted or used by a mobile telephone device the mobile telephone device is able to freely read or write data to and from the accessible memory. The telecommunications access card further has a protected memory. The protected memory is not able to be accessed by the mobile telephone device. Data, executable code, or configuration information may be stored in the protected memory. The processor of the mobile telephone device only has access to the accessible memory. The telecommunications access card may have a microcontroller or a built in processor which has access to the accessible memory and the protected memory. Execution of the computer program causes the processor to write a set of encrypted files to the access memory in a predetermined order. The telecommunications card is adapted to decrypt the encrypted files in the predetermined order into at least one decrypted file. The telecommunications access card is adapted to write the at least one decrypted file into the protected memory. Embodiments of the invention may be beneficial because the set of encrypted files are not transmitted via the mobile telephone network.

In the prior art, the telecommunications access card receives the set of encrypted files via digital SMS messages. A disadvantage of sending the SMS messages via mobile telephone or cellular network is that the digital SMSs may clog or slow down the mobile telephone network. Additionally if one message is missed then the sequential encrypted files may have one missing message or are not in the proper sequence. The telecommunications access card may then not be able to decrypt the set of encrypted files. Embodiments of the invention may solve some or all of these problems by using a program to write the set of encrypted files to the accessible memory.

Writing the at least one decrypted file to the protected memory may have several different consequences. For instance the at least one decrypted file may be a software update for the telecommunications access card. For instance this may be used as a mechanism for updating the software or firmware of the telecommunications access card. In other instances or embodiments writing the at least one decrypted file to the protected memory may be used for configuring the telecommunications access card

In another embodiment the computer program comprises the set of encrypted files. This may be extremely beneficial because the computer program is provided by the central server via the network connection. Since the set of encrypted files is provided with the computer program it is not necessary to download or retrieve the set of encrypted files. The computer program was downloaded with the set of encrypted files and may be used for managing the transfer of the set of encrypted files to the accessible memory.

In another embodiment execution of the instructions causes the processor to check the central server for an updated computer program. The updated computer program comprises an updated version of the set of encrypted files. This embodiment may be advantageous because the computer program provides a mechanism for automatically updating the set of encrypted files. This for instance may be used to update or keep updated software used for running the telecommunications access card.

In another embodiment execution of the instructions further causes the processor to write the updated version of the set of encrypted files to the accessible memory in a predetermined order.

In another embodiment the computer network further comprises a secure server. In some embodiments the secure server is distinct from the central server. In other embodiments the central server and the secure server are identical. The secure server is also connected to the mobile telephone device via the network connection. Execution of the instructions causes the processor to retrieve the set of encrypted files via the network connection. In some embodiments essentially the computer program is a program which is run by the mobile telephone device and the set of encrypted files are located on the secure server. The computer program then retrieves the set of encrypted files from the secure server and writes them to the accessible memory in the predetermined order. This embodiment may be advantageous because updated or current versions of the set of encrypted files can be provided to the telecommunications access card in a secure fashion. For instance the secure server may use an encrypted or secure means of transferring the set of encrypted files to the mobile telephone device.

In another embodiment Execution of the instructions causes the processor to check the secure server for an updated version of the set of encrypted files. For instance the program may cause the processor to periodically check for an updated version of the set of encrypted files. Execution of the instructions further causes the processor to retrieve the updated version of the set of encrypted files via the network connection. In some embodiments the updated version of the set of encrypted files is copied to the accessible memory in a predetermined order. This embodiment may be advantageous because it provides an automated means of updating the set of encrypted files.

In another embodiment Execution of the instructions causes the processor to send a request to the secure server. The secure server is configured to generate the updated version of the set of encrypted files upon receiving the request. This embodiment may be extremely advantageous because the request may also specify data which is used to custom generate the set of encrypted files. For instance the request may be used to personalize the software on the telecommunications access card. It may also be used to activate the telecommunications access card. For instance the request may contain personal identification identifying the user of the mobile telephone device.

In another embodiment Execution of the instructions further causes the processor to append a cryptographic signature to the request before sending the request to the secure server. In alternate embodiments the request is encrypted by the processor. Appending a cryptographic signature to the request allows the verification that the request was genuinely generated by the mobile telephone device. For instance an encryption key on the mobile telephone device or the telecommunications access card may be used to generate the cryptographic signature. Using a cryptographic key on the telecommunications access card is particularly beneficial because the request can be verified as originating from the telecommunications access card. This allows the secure configuration or updating of a particular telecommunications access card. The server verifies the cryptographic signature before generating the updated version of the set of encrypted files.

In another embodiment the mobile telephone device comprises a display. The mobile telephone device is configured for displaying a user interface. The display may for instance be a touchscreen which enables manipulation or entering of date into the user interface or there may be buttons or other data entry means on a surface of the mobile telephone device for entering data into the user interface. In some embodiments voice recognition may be part of the interface and allow data entry. The user interface is configured for receiving a control signal from a user. Reception of the control signal from the user causes the computer program to initiate the writing of a set of encrypted files to the accessible memory. This is beneficial because the user interface enables the management of the writing of the set of encrypted files to the accessible memory by a user. For instance a user may choose when or how to update the telecommunications access card software or data.

In another embodiment the user interface is configured for receiving scheduling data. Scheduling data as used herein encompasses data which identifies particular times or intervals. Execution of the instructions causes the processor to write the set of encrypted files to the accessible memory at a time determined in accordance with the scheduling data. For instance the scheduling data may be used to cause the writing of the encrypted files to the accessible memory at a particular time. This may be for instance when the user is sleeping or not using the mobile telephone device. The scheduling data may also be used to check for updated versions of the set of encrypted files at a particular interval or at particular times.

In another embodiment the network connection is any one of the following: TCP/IP, wireless LAN, LAN, USB, Bluetooth, and combinations thereof. For instance the mobile telephone device may connect to a computer using Bluetooth and then the computer may connect to the central server via network connection using a LAN connection or wireless LAN.

In another embodiment the set of encrypted files are binary SMS messages.

In another embodiment the telecommunications chip card is adapted for performing a software update by writing the at least one decrypted file to the protected memory. In another aspect the invention provides for a mobile telephone device configured for receiving the computer program from the central server via a network connection. The mobile telephone device comprises a memory for storing machine executable instructions. The mobile telephone device further comprises a processor for executing the machine executable instructions. The mobile telephone device further comprises a telecommunications access card. The telecommunications access card has an accessible memory and a protected memory. Execution of the machine executable instructions causes the processor to write a set of encrypted files to the accessible memory in a predetermined order. The telecommunications access card is adapted to decrypt the encrypted files in the predetermined order into at least one decrypted file. The telecommunications access card is adapted to write the at least one decrypted file to the protected memory. The advantages of this mobile telephone device have been previously discussed.

In another aspect the invention further provides for a computer readable storage medium containing machine executable instructions for execution by a processor of a mobile telephone device. The mobile telephone device is configured for receiving a computer program from a central server via a network connection. The mobile telephone device comprises a telecommunications access card. The telecommunications access card has an accessible memory and a protected memory. Execution of the computer program causes the processor to write a set of encrypted files to the accessible memory in a predetermined order. The advantages of this computer readable storage medium have been previously discussed.

In another aspect the invention provides for a method of operating a computer network. The computer network (500, 600) comprises a central server (516) for providing a computer program (524) comprising machine executable instructions. The computer network further comprises a mobile telephone device (502) comprising a processor (544) for executing the computer program. The mobile telephone is configured for receiving (100, 200, 300, 400) the computer program from the central server via a network connection (510, 514). The mobile telephone device comprises a telecommunication access card (554). The telecommunications access card has an accessible memory (558) and a protected memory (562). The method comprises the step of providing a computer program using the central server.The method further comprises the step of writing (102, 202, 304, 408) a set of encrypted files (526, 528, 530, 532) to the accessible memory in a predetermined order. The method further comprises the step of decrypting (104, 204, 306, 410) the encrypted files in the predetermined order into at least one decrypted file (566) using the telecommunications access card. The method further comprises the step of writing (106, 210, 308, 412) the at least one decrypted file to the protected memory using the telecommunication access card. This method may be implemented as computer program product or as a set of computer executable instructions on a computer readable storage medium. The instructions may be contained on multiple computer readable storage mediums and/or be implemented by multiple processors.

### Brief description of the drawings

In the following embodiments of the invention are explained in greater detail, by way of example only, making reference to the drawings in which:
Fig. 1 shows a flow diagram which illustrates a method according to an embodiment of the invention;
Fig. 2 shows a flow diagram which illustrates a method according to a further embodiment of the invention;
Fig. 3 shows a flow diagram which illustrates a method according to a further embodiment of the invention;
Fig. 4 shows a flow diagram which illustrates a method according to a further embodiment of the invention;
Fig. 5 illustrates a computer network according to an embodiment of the invention;
Fig. 6 illustrates a computer network according to afurther embodiment of the invention; and
Fig.7 illustrates a graphical user interface according to an embodiment of the invention.

### Detailed description of the embodiments

Like numbered elements in these figures are either equivalent elements or perform the same function. Elements which have been discussed previously will not necessarily be discussed in later figures if the function is equivalent.

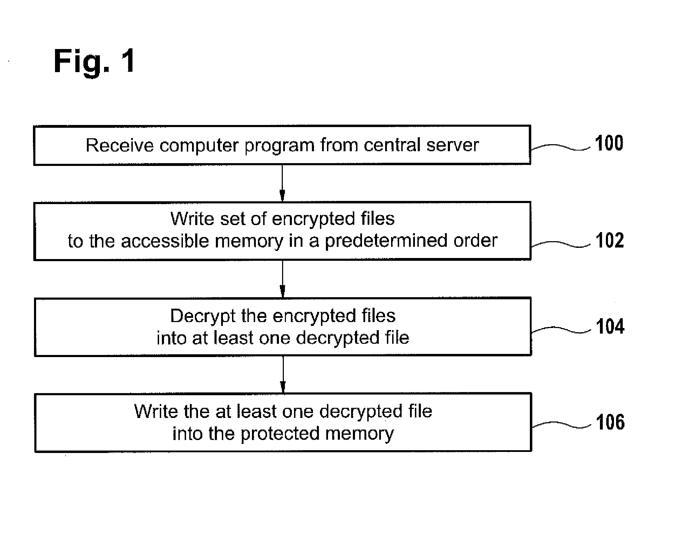

Fig. 1 shows a flow diagram which illustrates a method according to an embodiment of the invention. First in step 100 a mobile telephone device receives a computer program from a central server. Next in step 102 the computer program contains instructions which cause a processor of the mobile telephone device to write a set of encrypted files to the accessible memory of a telecommunications access card in a predetermined order. Next in step 104 the telecommunications access card decrypts the encrypted files into at least one decrypted file. Finally in step 106 the telecommunications access card writes the at least one decrypted file into the protected memory of the telecommunications access card.

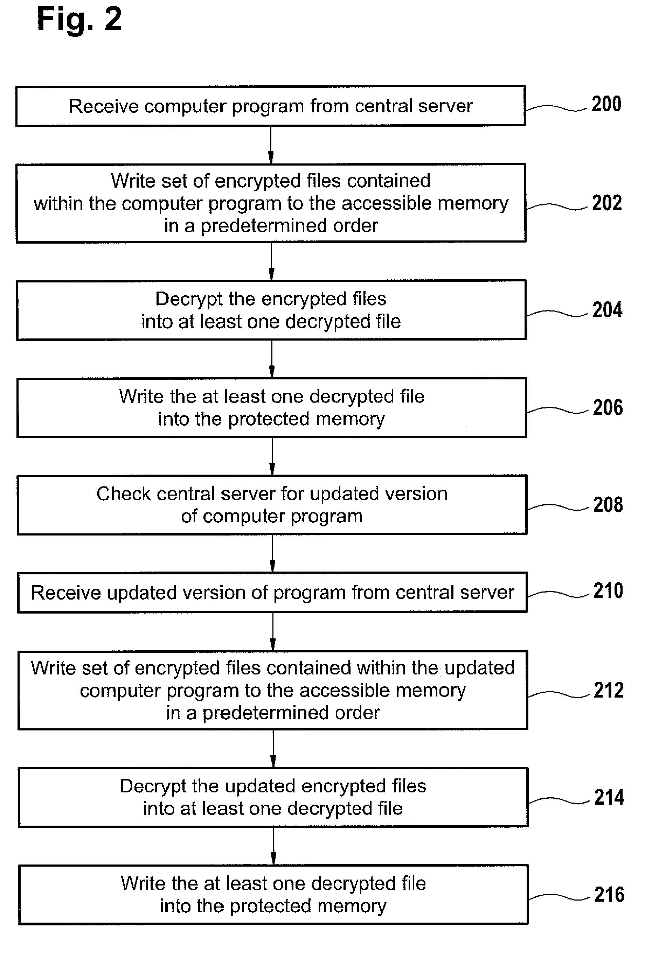

Fig. 2 shows a flow diagram which illustrates a method according to a further embodiment of the invention. In step 200 a mobile telephone device receives a computer program from a central server. Next in step 202 a processor of the mobile telephone device writes a set of encrypted files contained within the computer program to the accessible memory in a predetermined order. Next in step 204 the telecommunications access card decrypts the encrypted files into at least one decrypted file. In step 206 the telecommunications access card writes the at least one decrypted file into the protected memory of the telecommunications access card. Next in step 208 instructions of the computer program cause the processor of the mobile telephone device to check the central server for an updated version of the computer program. If the computer program has been updated the instructions cause the processor to receive the updated version of the program from the central server in step 210. Next in step 212 the encrypted files of the updated version of the program are written by the processor into the accessible memory in a predetermined order. Next in step 214 the updated encrypted files are decrypted by the telecommunications access card into at least one decrypted file. Finally in step 216 the updated version of the at least one decrypted file is written into the protected memory by the telecommunications access card.

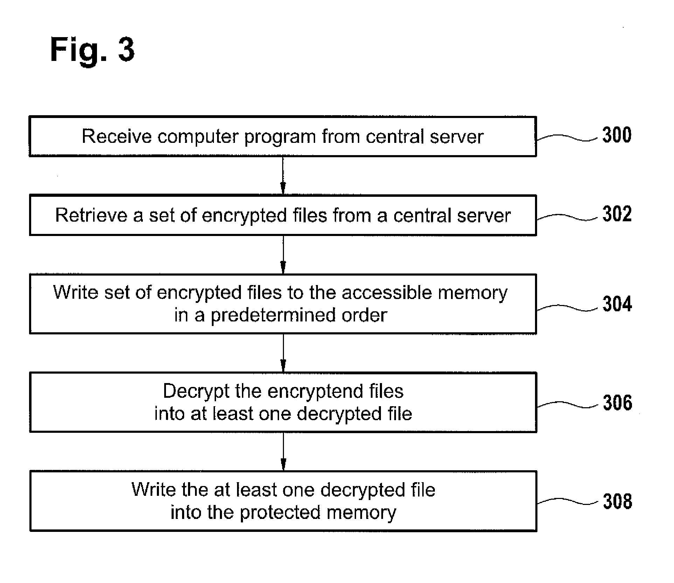

Fig. 3 shows a flow diagram which illustrates a method according to an embodiment of the invention. First in step 300 a mobile telephone device receives a computer program from a central server. Execution of the instructions of the program cause a processor of the mobile telephone device to receive a set of encrypted files from a central server. Next in step 304 the processor writes the set of encrypted files to an accessible memory of the mobile telephone device in a predetermined order. In step 306 the telecommunications access card decrypts the encrypted files into at least one decrypted file. Finally in step 308 the telecommunications access card writes at least one decrypted file into the protected memory.

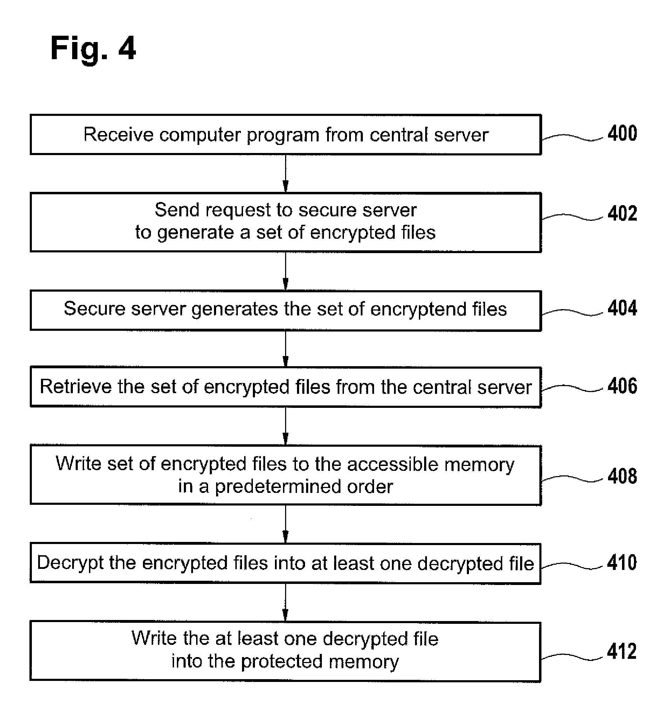

Fig. 4 shows a flow diagram which illustrates a method according to a further embodiment of the invention. In step 400 a mobile telephone device receives a computer program from a central server. Next in step 402 the program causes the processor to send a request to a secure server to generate a set of encrypted files. In some embodiments the request includes a cryptographic signature or is cryptographically encrypted. The encryption key may come from the mobile telephone device or from the telecommunications access card. Next in step 404 a secure server generates the set of encrypted files. Next in step 406 the processor of the mobile telephone device retrieves the set of encrypted files from the central server. Next in step 408 the processor writes the set of encrypted files to the accessible memory in a predetermined order. In step 410 the telecommunications access card decrypts the encrypted files into at least one decrypted file. Finally in step 412 the telecommunications access card writes the at least one decrypted file into a protected memory of the telecommunications access card.

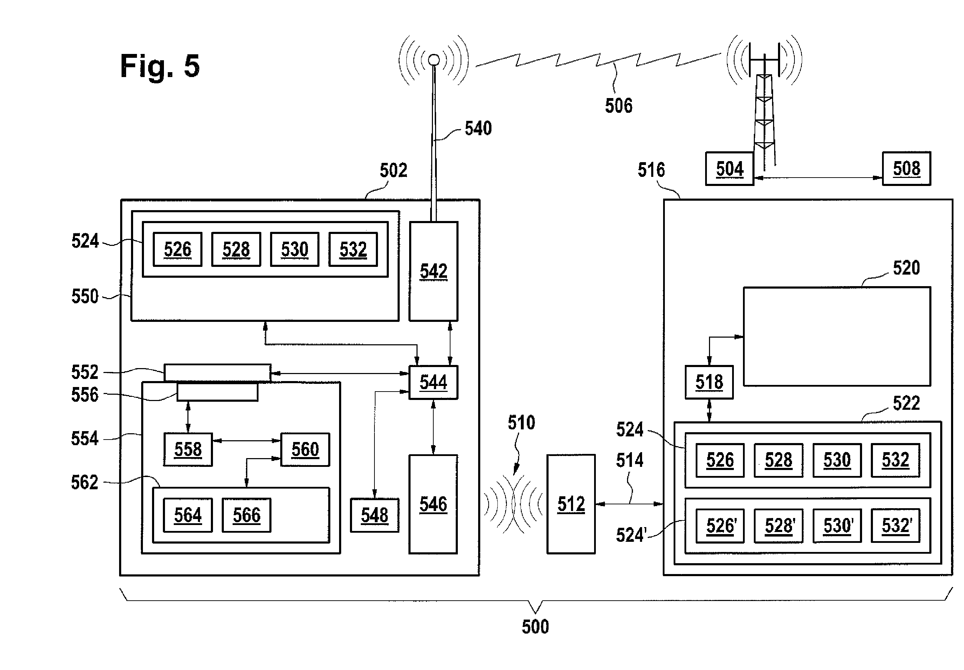

Fig. 5 illustrates a computer network 500 according to an embodiment of the invention. In Fig. 5 a mobile telephone device 502 is shown. Also shown is a base station 504 of a cellular communication network. There is a radio communication link 506 between the mobile telephone device 502 and the base station 504. The base station 504 allows the mobile telephone device 502 to connect to a telecommunications network 508. The mobile telephone device is further shown as having a first network connection 510 to a computer 512. The computer 512 then has a second network connection 514 to a central server 516. The first network connection 510 and the second network connection 514 are illustrative. The point is that the mobile telephone device 502 connects through one or more network connections 510, 514 to a central server 516. The mobile telephone device 502 connects to the central server 516 using these network connections 510, 514 instead of the radio communications link 506. The central server 516 is shown as containing a processor 518. The processor 518 is connected to computer memory 520 and computer storage 522. The computer memory 520 may contain programs and executable code for running the processor 518. Inside the computer storage 522 is shown a computer program 524. The computer program 524 is for execution by the mobile telephone device 502. The computer program 524 is shown as containing encrypted files 526, 528, 530, 532. The computer storage 522 is also shown as containing an updated computer program 524'. The updated computer program 524' contains updated encrypted files 526', 528', 530', and 532'.

The mobile telephone device 502 includes an antenna 540 which is connected to a transmitter 542. The mobile telephone device 502 uses the antenna 540 and transceiver 542 to establish the radio communications link 506 with the base station 504. The mobile telephone device 502 further comprises a processor 544. The processor 544 is able to communicate with the transceiver 542, a network adaptor 546, a display 548, a telecommunications chip card reader 552, and storage 550. The network adaptor 546 is adapted for performing the first network connection 510. In this case it is a wireless network connection 510 and may be for example Wi-Fi or a Bluetooth connection with the computer 512. The mobile telephone device 502 has a display 548 with a graphical user interface that enables an operator to control the operation and function of the mobile telephone device 502. The telecommunications chip card reader 552 enables the telecommunications chip card 554 to communicate with the processor 544. The computer storage 550 is shown as containing the computer program 524. The computer program 524 was transferred via the first 510 and second 514 network connections to the storage 550. There is shown a telecommunications chip card 554 connected to the telecommunications chip card reader 552. The telecommunications chip card 554 is shown as comprising a chip card reader interface 556. The telecommunications chip card reader 552 and the chip card reader interface 556 enable the telecommunications chip card 554 to communicate with the processor 544. The telecommunications chip card 554 is shown as having an accessible memory 558. The processor 544 is able to directly write files to the accessible memory 558. For instance the processor 544 may write the files 526, 528, 530, and 532 sequentially into the accessible memory 558. The telecommunications chip card is shown as having a processor 560 which has access to the accessible memory 558 and a protected memory 562. The processor 544 is not able to access the protected memory 562. If the files 526, 528, 530 and 532 are written sequentially into the accessible memory 558, the processor 560 is able to use a cryptographic module 564 to decrypt them. The cryptographic module 564 may include software and/or a cryptographic key which enables the decryption of the encrypted files 526, 528, 530, 532. Once the encrypted files 526, 528, 530, 532 have been decrypted into the at least one decrypted file 566. The processor 560 then copies the decrypted file 566 into the protected memory 562. Copying the decrypted file 566 into the protected memory 562 may for instance update the software which is used to operate and control the telecommunications chip card 554 or it may update and change configuration settings which the telecommunications chip card 554 uses for its operation. The encrypted files 526, 528, 530, and 532 are only able to be decrypted using the cryptographic module 564. The encrypted files 526, 528, 530, 532 can also have been delivered via binary SMSs using the radio link 506. However, this may cause the radio communication link 506 to become jammed or clogged if a large number of mobile telephone devices 502 are being updated. The use of the central server 516 using an alternative network connection 510, 514 enables the delivery of the encrypted files 526, 528, 530, 532 to the telecommunications chip card 554 without degrading the performance of the radio communication link 506.

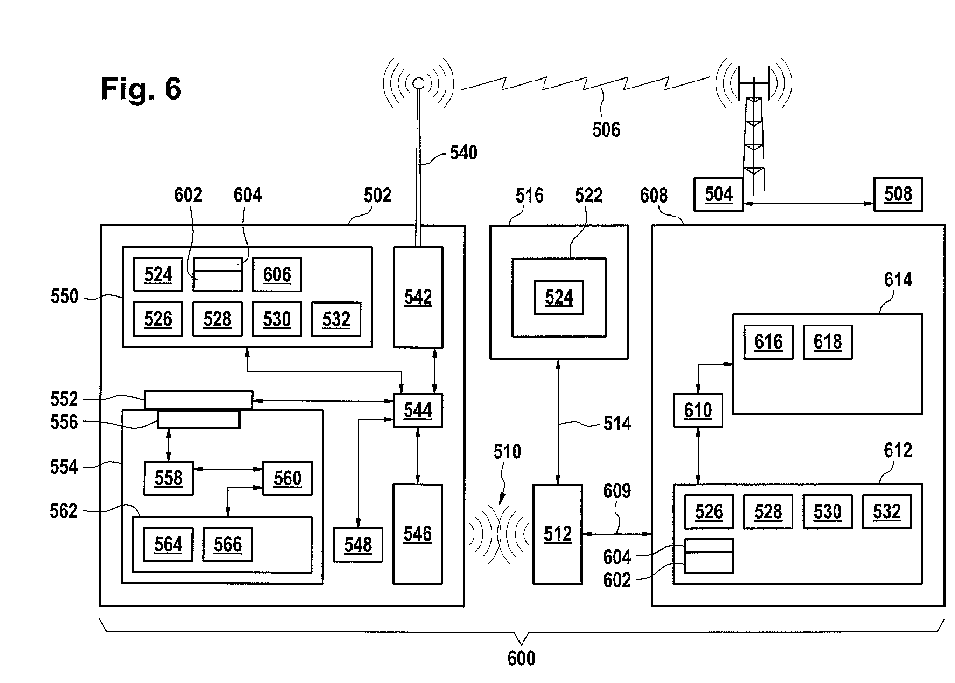

Fig. 6 illustrates a computer network 600 according to an alternative embodiment of the invention. The embodiment shown in Fig. 6 is similar to that of Fig. 5. However in this embodiment the computer program 524 does not contain the encrypted files 526, 528, 530, and 532. Instead the encrypted files 526, 528, 530, 532 are retrieved from a secure server 608. The program 524 is able to generate a request 602. The request 602 is shown as being stored in the computer memory 550. The request 602 has a cryptographic signature 604 appended to it. In this embodiment the cryptographic signature 604 was generated by the cryptographic module 564 of the telecommunications chip card 554. The program 524 contains code which causes the processor 554 to send the request 602 with the cryptographic signature 604 to a secure server 608 via a third network connection 609. The same request 602 and cryptographic signature 604 are shown as being stored in the computer storage 612. The secure server 608 comprises a processor with a secure memory 614 and storage 612. Upon receiving the request 602 it is verified by a cryptographic module 616. After receiving the request 602 the processor 610 uses an encrypted file generation module 618 to generate the encrypted files 526, 528, 530 and 532. These files are then retrieved by the processor 544 and stored in memory 550. The program 524 can then write the encrypted files 526, 528, 530, 532 to the accessible memory 558. The files are then processed in the same way as was in the embodiment shown in Fig. 5. In some embodiments the program 524 may use scheduling data 606 to schedule when the encrypted files 526, 528, 530, 532 are copied to the accessible memory 558 and/or when a request 602 is sent to the secure server 608.

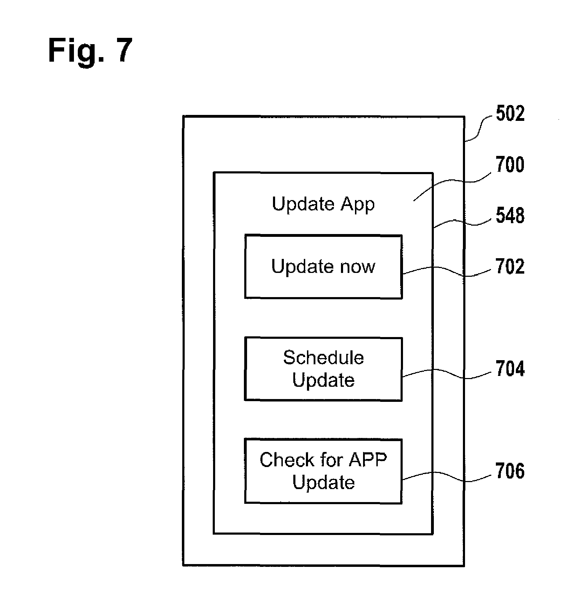

Fig. 7 illustrates a mobile telephone network 502 according to an embodiment of the invention. The mobile telephone network 502 has a display 548. In this case the display 548 is a touch sensitive display. On the display is shown a graphical user interface 700. In this example the graphical user interface 700 may be used for several different things. First there is a button labeled 702 which causes the processor 544 to receive a signal which causes it to copy the set of encrypted files to the accessible memory of the telecommunications card. There is also a button 704 which allows the program or application to schedule updates. This may be used for instance to schedule when the set of encrypted files will be copied to the accessible memory of the telecommunications chip card or when updates will be checked for at the secure server or the central server. Finally button 706 causes a signal to be sent to the processor which causes the program to check the central server and/or the secure server for software updates and/or encrypted file updates immediately.

### List of reference numerals

- 500: computer network
- 502: mobile telephone device
- 504: base station
- 506: radio communications link
- 508: telecommunications network
- 510: first network connection
- 512: computer
- 514: second network connection
- 516: central server
- 518: processor
- 520: computer memory
- 522: computer storage
- 524: computer program
- 524': updated computer program
- 526: encrypted file
- 526': updated encrypted file
- 528: encrypted file
- 528': updated encrypted file
- 530: encrypted file
- 530': updated encrypted file
- 532: encrypted file
- 532': updated encrypted file
- 540: antenna
- 542: transceiver
- 544: processor
- 546: network adaptor
- 548: display
- 550: storage
- 552: telecommunications chip card reader
- 554: telecommunication chip card
- 556: chip card reader interface
- 558: accessible memory
- 560: processor
- 562: protected memory
- 564: cryptographic module
- 566: decrypted file
- 600: computer network
- 602: request
- 604: cryptographic signature
- 606: scheduling data
- 608: secure server
- 609: third network connection
- 610: processor
- 612: computer storage
- 614: computer memory
- 516: cryptographic module
- 618: encrypted file generation module
- 700: graphical user interface
- 702: update now button
- 704: schedule update button
- 706: check for App update button

## Claims

1. A computer network (500, 600) comprising:
- a central server (516) for providing a computer program (524) comprising machine executable instructions; and
- a mobile telephone device (502) comprising a processor (544) for executing the computer program, wherein the mobile telephone is configured for receiving (100, 200, 300, 400) the computer program from the central server via a network connection (510, 514), wherein the mobile telephone device comprises a telecommunication access card (554), wherein the telecommunications access card has an accessible memory (558) and a protected memory (562), wherein execution of the computer program causes the processor to write (102, 202, 304, 408) a set of encrypted files (526, 528, 530, 532) to the accessible memory in a predetermined order, wherein the telecommunications access card is adapted to decrypt (104, 204, 306, 410) the encrypted files in the predetermined order into at least one decrypted file (566), wherein the telecommunications access card is adapted to write (106, 216, 308, 412) the at least one decrypted file to the protected memory.

2. The computer network of claim 1, wherein the computer program comprises the set of encrypted files.

3. The computer network of any one of the preceding claims, wherein execution of the instructions causes the processor to check (208) the central server for an updated computer program (524'), wherein the updated computer program comprises an updated version of the set of encrypted files (526', 528', 530', 532').

4. The computer network of claim 1, wherein the computer network further comprises a secure server (608), wherein the secure server is connected to the mobile telephone device via the network connection (510, 609), wherein execution of the instructions causes the processor to retrieve the set of encrypted files via the network connection.

5. The computer network of claim 4, wherein execution of the instructions causes the processor to check the secure server for an updated version of the set of encrypted files, wherein execution of the instructions further causes the processor to retrieve the updated version of the set of encrypted files via the network connection.

6. The computer network of claim 5, wherein execution of the instructions causes the processor to send a request (402) to the secure server (602), wherein the secure server is configured to generate the updated version of the set of encrypted files upon receiving the request.

7. The computer network of any one of the preceding claims, wherein execution of the instructions further causes the processor to append a cryptographic signature (604) to the request before sending the request to the secure server, and wherein the secure server verifies the cryptographic signature before generating the updated version of the set of encrypted files.

8. The computer network of any one of the preceding claims, wherein the mobile telephone device comprises a display (548), wherein the mobile telephone device is configured for displaying a user interface (700), wherein the user interface is configured (702) for receiving a control signal from a user, and wherein reception of the control signal from of the user program causes the computer program to initiate the writing of the set of encrypted files to the accessible memory.

9. The computer network of claim 8, wherein the user interface is configured (704) for receiving scheduling data (606), and wherein execution of the instructions causes the processor to write the set of encrypted files to the accessible memory at a time determined in accordance with the scheduling data.

10. The computer network of any one of the preceding claims, wherein the network connection is any one of the following: TCP/IP, wireless LAN, LAN, Bluetooth, USB, and combinations thereof.

11. The computer network of any one of the preceding claims, wherein the set of encrypted files are binary SMS messages.

12. The computer network of any one of the preceding claims, wherein the telecommunication chip card is adapted for performing a software update by writing the at least one decrypted file to the protected memory.

13. A mobile telephone device (502) configured for receiving (100, 200, 300, 400) a computer program (524) comprising machine executable instructions from a central server (516) via a network connection (510, 514), wherein the mobile telephone device comprises:
- a memory (550) for storing machine executable instructions;
- a processor (544) for executing the machine executable instructions;
- a telecommunication access card (554), wherein the telecommunications access card has an accessible memory (558) and a protected memory (562), wherein execution of the machine executable instructions causes the processor to write (102, 202, 304, 408) a set of encrypted files (526, 538, 530, 532) to the accessible memory in a predetermined order, wherein the telecommunications access card is adapted to decrypt (104, 204, 306, 410) the encrypted files in the predetermined order into at least one decrypted file (566), wherein the telecommunications access card is adapted to write (106, 216, 308, 412) the at least one decrypted file to the protected memory.

14. A computer readable storage medium (550) containing machine executable instructions (524) for execution by a processor (544) of a mobile telephone device (502), wherein the mobile telephone device is configured for receiving (100, 200, 300, 400) the machine executable instructions from a central server (516) via a network connection (510, 514), wherein the mobile telephone device comprises a telecommunications access card (554), wherein the telecommunications access card has an accessible memory (558) and a protected memory (562), and wherein execution of the computer program cause the processor to write (102, 202, 304, 408) a set of encrypted files (526, 538, 530, 532) to the accessible memory in a predetermined order.

15. A method of operating a computer network, wherein the computer network (500, 600) comprises a central server (516) for providing a computer program (524) comprising machine executable instructions, wherein the computer network further comprises a mobile telephone device (502) comprising a processor (544) for executing the computer program, wherein the mobile telephone is configured for receiving (100, 200, 300, 400) the computer program from the central server via a network connection (510, 514), wherein the mobile telephone device comprises a telecommunication access card (554), wherein the telecommunications access card has an accessible memory (558) and a protected memory (562),
wherein the method comprises the steps of:
- providing a computer program using the central server;
- writing (102, 202, 304, 408) a set of encrypted files (526, 528, 530, 532) to the accessible memory in a predetermined order;
- decrypting (104, 204, 306, 410) the encrypted files in the predetermined order into at least one decrypted file (566) using the telecommunications access card; and
- writing (106, 216, 308, 412) the at least one decrypted file to the protected memory using the telecommunication access card.

## Amended claims

### Amended claims in accordance with Rule 137(2) EPC.

**1.** A computer network (500, 600) comprising:
- a central server (516) for providing a computer program (524) comprising machine executable instructions; and
- a mobile telephone device (502) comprising a processor (544) for executing the computer program, wherein the mobile telephone is configured for receiving (100, 200, 300, 400) the computer program from the central server via a network connection (510, 514), wherein the mobile telephone device comprises a telecommunication access card (554), wherein the telecommunications access card has an accessible memory (558) and a protected memory (562), wherein execution of the computer program causes the processor to write (102, 202, 304, 408) a set of encrypted files (526, 528, 530, 532) to the accessible memory in a predetermined order, wherein the set of encrypted files are binary SMS messages, wherein the computer program comprises the set of encrypted files, wherein the telecommunications access card is adapted to decrypt (104, 204, 306, 410) the encrypted files in the predetermined order into at least one decrypted file (566), wherein the telecommunications access card is adapted to write (106, 216, 308, 412) the at least one decrypted file to the protected memory.

**2.** The computer network of claim 1, wherein execution of the instructions causes the processor to check (208) the central server for an updated computer program (524'), wherein the updated computer program comprises an updated version of the set of encrypted files (526', 528', 530', 532').

**3.** The computer network of any one of the preceding claims, wherein execution of the instructions further causes the processor to append a cryptographic signature (604) to the request before sending the request to the secure server, and wherein the secure server verifies the cryptographic signature before generating the updated version of the set of encrypted files.

**4.** The computer network of any one of the preceding claims, wherein the mobile telephone device comprises a display (548), wherein the mobile telephone device is configured for displaying a user interface (700), wherein the user interface is configured (702) for receiving a control signal from a user, and wherein reception of the control signal from of the user program causes the computer program to initiate the writing of the set of encrypted files to the accessible memory.

**5.** The computer network of claim 4, wherein the user interface is configured (704) for receiving scheduling data (606), and wherein execution of the instructions causes the processor to write the set of encrypted files to the accessible memory at a time determined in accordance with the scheduling data.

**6.** The computer network of any one of the preceding claims, wherein the network connection is any one of the following: TCP/IP, wireless LAN, LAN, Bluetooth, USB, and combinations thereof.

**7.** The computer network of any one of the preceding claims, wherein the telecommunication chip card is adapted for performing a software update by writing the at least one decrypted file to the protected memory.

**8.** A mobile telephone device (502) configured for receiving (100, 200, 300, 400) a computer program (524) comprising machine executable instructions from a central server (516) via a network connection (510, 514), wherein the mobile telephone device comprises:
- a memory (550) for storing machine executable instructions;
- a processor (544) for executing the machine executable instructions;
- a telecommunication access card (554), wherein the telecommunications access card has an accessible memory (558) and a protected memory (562), wherein execution of the machine executable instructions causes the processor to write (102, 202, 304, 408) a set of encrypted files (526, 538, 530, 532) to the accessible memory in a predetermined order, wherein the set of encrypted files are binary SMS messages, wherein the computer program comprises the set of encrypted files, wherein the telecommunications access card is adapted to decrypt (104, 204, 306, 410) the encrypted files in the predetermined order into at least one decrypted file (566), wherein the telecommunications access card is adapted to write (106, 216, 308, 412) the at least one decrypted file to the protected memory.

**9.** A computer readable storage medium (550) containing machine executable instructions (524) for execution by a processor (544) of a mobile telephone device (502), wherein the mobile telephone device is configured for receiving (100, 200, 300, 400) the machine executable instructions from a central server (516) via a network connection (510, 514), wherein the mobile telephone device comprises a telecommunications access card (554), wherein the telecommunications access card has an accessible memory (558) and a protected memory (562), wherein execution of the computer program cause the processor to write (102, 202, 304, 408) a set of encrypted files (526, 538, 530, 532) to the accessible memory in a predetermined order, wherein the set of encrypted files are binary SMS messages, wherein the computer program comprises the set of encrypted files, wherein the telecommunications access card is adapted to write (106, 216, 308, 412) the at least one decrypted file to the protected memory.

**10.** A method of operating a computer network, wherein the computer network (500, 600) comprises a central server (516) for providing a computer program (524) comprising machine executable instructions, wherein the computer network further comprises a mobile telephone device (502) comprising a processor (544) for executing the computer program, wherein the mobile telephone is configured for receiving (100, 200, 300, 400) the computer program from the central server via a network connection (510, 514), wherein the mobile telephone device comprises a telecommunication access card (554), wherein the telecommunications access card has an accessible memory (558) and a protected memory (562),
wherein the method comprises the steps of:
- providing a computer program using the central server;
- writing (102, 202, 304, 408) a set of encrypted files (526, 528, 530, 532) to the accessible memory in a predetermined order, wherein the set of encrypted files are binary SMS messages, wherein the computer program comprises the set of encrypted files;
- decrypting (104, 204, 306, 410) the encrypted files in the predetermined order into at least one decrypted file (566) using the telecommunications access card; and
- writing (106, 216, 308, 412) the at least one decrypted file to the protected memory using the telecommunication access card.
